# EUROPÄISCHE PATENTSCHRIFT

(11) **EP 1 737 715 B1**
(45) Veröffentlichungstag und Bekanntmachung des Hinweises auf die Patenterteilung: **22.08.2007**
(21) Anmeldenummer: 05741964.0
(22) Anmeldetag: 12.04.2005
(51) Int. Cl.: B60T 8/36, B60T 15/02, F16K 31/06

(54) **MAGNETVENTIL**
SOLENOID VALVE
ELECTROVANNE

(30) Priorität: 20.04.2004 DE 102004019574
(43) Veröffentlichungstag der Anmeldung: 03.01.2007
(73) Patentinhaber: Rausch & Pausch GmbH, 95100 Selb (DE)
(72) Erfinder: DÖHLA, Werner, 95482 Gefrees (DE); GREINER, Herwig, 95367 Trebgast (DE); SEEWALD, Olaf, 95028 Hof (DE)
(74) Vertreter: Bock, Gerhard
(86) Internationale Anmeldenummer: PCT/DE2005/000673
(87) Internationale Veröffentlichungsnummer: WO 2005/102807

(56) Entgegenhaltungen:
- EP-A- 0 524 440
- EP-A- 1 400 424
- WO-A-97/15771
- DE-A1- 4 419 875
- DE-A1- 10 003 204
- DE-A1- 19 710 050
- US-A- 5 718 489
- US-B1- 6 209 970
- US-B1- 6 390 444

## Beschreibung

Die Erfindung betrifft ein Magnetventil mit einem an einem Anker befestigten Dichtkörper und einem Dichtsitz, die in einem Führungsrohr relativ zueinander bewegbar sind und sich in mindestens Bewegungsendlage elastisch kontaktieren. Diese Ventile werden bspw. in der Kraftfahrzeugtechnik als Pneumatikventile einzeln oder in Gruppen zusammengefasst verwendet.

Bekannt sind Ventile, bei denen ein elastisches Mittel am Dichtkörper oder am Dichtsitz befestigt ist, siehe z. B. GB-A-399510 und SU-A1-1442774.
Ferner sind Magnetventile im Gebrauch, bei denen ein aus einem Elastomer bestehender Dichtkörper an einem Magnetanker befestigt und dieser durch eine Feder- oder Magnetkraft in einem metallischen Führungsrohr gegen einen aus einem festen Kunststoff bestehenden Dichtsitz gedrückt wird. Druckrohr und Dichtsitz bestehen zwar aus zwei Teilen, sind aber baulich vereinigt, siehe DE 198 48 919 A1. Hierzu ist ein zusätzlicher Montagearbeitsgang erforderlich, bei dem sich die Toleranzen der Bauteile summieren und einen unzulässig großen radialen Versatz des Dichtsitzes zum Dichtkörper ebenso hervorrufen können wie eine störende Schiefstellung des Dichtsitzes zum Dichtkörper. Um eine stabile Umformung des Dichtsitzes durch das gezogene Führungsrohr zu erreichen, ist seine zusätzliche Wärmebehandlung erforderlich. Werden die einzelnen Bauteile spanabhebend bearbeitet, so ist das nicht nur aufwändig und teuer, sondern es kann insbesondere, wenn die Bauteile aus Kunststoff bestehen, zu ungewollten Verformungen und Verspannungen kommen. Auch ist aus der DE 198 48 919 A1 ein Magnetventil bekannt, bei dem der Spulenkörper gleichzeitig als Führungsrohr dient, und an dem sich der Dichtsitz im Spulenkörper befindet. Abgesehen davon, dass die thermischen und mechanischen Belastungen hochwertige und teure Werkstoffe für den Spulenkörper erforderlich machen, enthalten in diesem Fall die Werkstoffe zumindest teilweise Glasfasern, so dass die Beanspruchung gewisser Bauteile erheblich und die Anschlussbearbeitung anderer Bauteile unmöglich sein kann. Außerdem erfordert diese Lösung für jeden Dichtdurchmesser und jede Wicklungsänderung eine Variante des Spulenkörpers. Die Befestigung des Magnetkerns in Kunststoff ist insofern kritisch, als die Hubeinstellung nur über den magnetischen Rückschluss stattfindet.

US 5718 489 offenbart ein Magnetventil gemäß dem Oberbegriff des unabhängigen Anspruchs 1.

Der Erfindung liegt daher die Aufgabe zu Grunde, ein Magnetventil zu schaffen, das den hohen Anforderungen an die Dichtheit der Funktionsverbindungen genügt, eine lange Lebensdauer, eine hohe Schaltspielzeit und hohe Durchflussraten bei minimiertem Energiebedarf aufweist. Es soll die vollautomatische, sichere Fertigung in Großserie und die prozesssichere Herstellung und Montage der Einzelteile ermöglichen.

Gemäß der Erfindung wird diese Aufgabe durch die Merkmale des ersten Patentanspruchs gelöst und durch die Merkmale der Unteransprüche vorteilhaft ausgestaltet. Das Führungsrohr endet einerseits am bzw. im Ventilkörper und ist an diesem Ende nach innen gebördelt oder geflanscht. Das gebördelte Ende wird umspritzt, wobei der Ventilkörper noch ein mehr oder weniger großes Stück aus dem Führungsrohr herausragt. Während das Führungsrohr vorteilhaft aus Metall besteht, kann der Dichtsitz (einschließlich der zugehörigen Düse) günstigerweise aus Kunststoff und ohne Glasfasereinlagen hergestellt sein. Aber auch andere Materialien, wie Metall oder Elastomer, sind zur Herstellung der kompakt sowie mechanisch und thermisch stabil gestaltbaren Düse möglich. Auch kann das gesamte Ende des Führungsrohres wie ein Einlegeteil umspritzt sein.
Die Erfindung ermöglicht die Formgebung des Dichtsitzes und seine Anbringung am Führungsrohr in einem Arbeitsgang, bei dem jegliche Formabweichungen zwischen beiden Bauelementen ausgeschlossen sind. Dies führt zu erheblichen Zeiteinsparungen und zur Verhinderung des Entstehens von Leckagen. Die Erfindung schafft aber auch günstige Voraussetzungen für die Automatisierung der Fertigung der Baugruppe Führungsrohr-Düse mit Dichtsitz, ggf. unter Anwendung von Mehrfachspritzgussformen, und verhindert gleichzeitig die Verschmutzung und Beschädigung der Dichtkonturen der Düse. Schließlich ist durch die Anwendung des Spritzgussverfahrens in einfacher Weise eine große Freiheit in der Formgestaltung und die Schaffung von optischen Unterscheidungsmöglichkeiten bei der Fertigung von Ventilvarianten gegeben.

Die Erfindung wird nachstehend an Hand der schematischen Zeichnung näher erläutert. Es zeigen:
- Fig.: 1 einen Längsschnitt eines Ausführungsbeispiels eines erfindungsgemäßen Magnetventils,
- Fig. 2: die erfindungswesentlichen Teile eines zweiten, in einem Längsschnitt dargestellten Ausführungsbeispiels und
- Fig. 3: einen Längsschnitt eines dritten Ausführungsbeispiels eines erfindungsgemäßen Ventils.

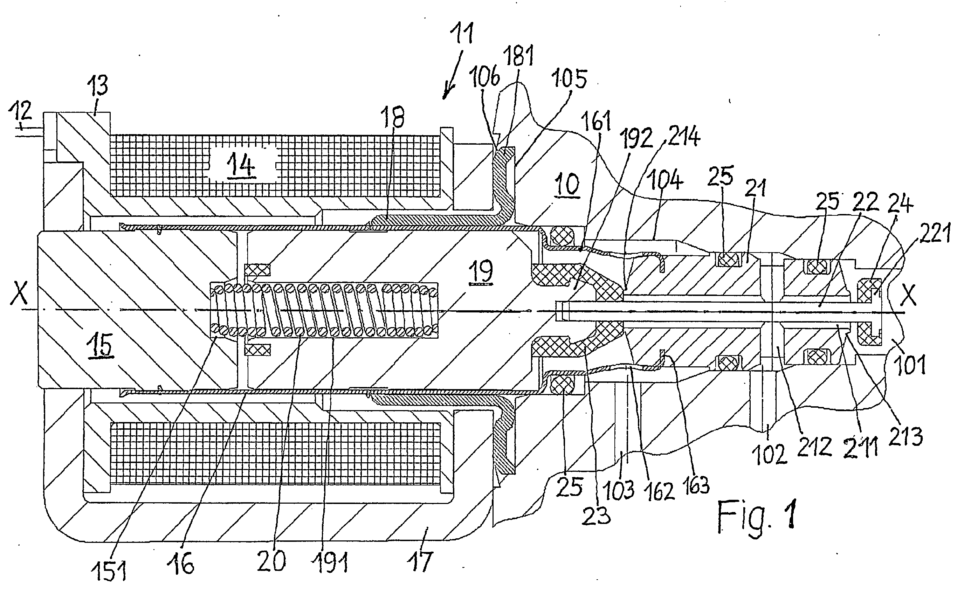

In Fig. 1 ist mit einem Ventilblock 10 ein im Wesentlichen koaxial zu einer Achse X-X angeordnetes und gestaltetes Magnetventil 11 fest verbunden, bei dem eine mit Anschlüssen 12 zur elektrischen Bestromung versehene, in einem isolierenden Träger 13 gefasste Spule 14 einen magnetischen Metallkern 15 und einen Führungszylinder 16 zumindest teilweise umgibt. Der Metallkern 15 ist an dem Führungszylinder 16 starr befestigt, mit dem eine Hülse 18 verschweißt ist, die mit ihrem ringförmigen Flansch 181 der Befestigung des Magnetventils 11 am Ventilblock 10 dient. Die Hülse 18 dient der Führung des magnetischen Flusses, ebenso wie ein Bügel 17, der die Spule 14 mit dem Träger 13 in Verbindung zum Ventilblock 10 hält. Kern 15 und Anker 19 besitzen an ihren einander zugewandten Seiten koaxial zur Achse X-X angeordnete Öffnungen (Bohrungen) 151 und 191 für eine Schraubenfeder 20, deren Bestreben es ist, den Anker 19 von dem Kern 15 wegzudrücken und damit einer bei Bestromung von der Spule 14 ausgehenden Magnetkraft entgegenzuwirken.
Der Anker 19 ist an seiner dem Kern 15 abgewandten Seite zentral mit einem Vorsprung 192 versehen, von dem sich in axialer Richtung durch einen Düsenkörper 21 ein Stab 22 erstreckt, der abseitig, an seinem aus dem Düsenkörper 21 herausragenden Ende mit einem Teller 221 versehen ist. Der Vorsprung 192 und der Teller 221 sind zumindest an ihren dem Düsenkörper 21 zugewandten Seiten je mit einem Elastomerüberzug 23, 24 versehen. Der bspw. aus Kunststoff bestehende Düsenkörper 21 besitzt Strömungskanäle 211 und 212, von denen der Strömungskanal 211 koaxial zur Achse X-X verläuft und gleichzeitig der Durchführung des Stabes 22 dient. Zum Strömungskanal 211 ist der ihn schneidende Kanal 212 quer, vorzugsweise rechtwinklig gerichtet. Mit den Strömungskanälen 211 und 212 korrespondieren im Ventilblock 10 Strömungskanäle 101, 102, 103 für das jeweilige Medium. Für eine Abdichtung der Strömungsräume des Ventils gegeneinander und zur Außenwelt sind O-Ringe 25 vorgesehen.
Der Führungszylinder 16 weist an seiner dem Düsenkörper 21 zugekehrten Seite ein abgesetztes Stück 161 mit Strömungsöffnungen 162 sowie ein gebördeltes Ende 163, das mit dem Kunststoff des Düsenkörpers 21 umpresst ist. Somit bestehen Führungszylinder 16 und Düsenkörper 21 aus einem Stück. Zwischen ihnen können keine durch unterschiedliche Bearbeitungsgänge bei der Herstellung bedingten Formdifferenzen auftreten.
Das in Fig. 1 stromlos dargestellte 3/2 Ventil zeigt eine Strömungsverbindung vom Einlass 102 zum Auslass 101. Einlass und Auslass können auch vertauscht sein. Im bestromten Zustand wird der Anker 19 entgegen der Wirkung der Feder 20 in die Spule 14 hinein gezogen bis der Teller 221 mit seinem Elastomerüberzug 24 das entsprechende Ende des Strömungskanals 211 verschließt und der Vorsprung 192 mit dem Elastomerüberzug 23 das entgegengesetzte Ende des Strömungskanals 211 öffnet, so dass eine Strömungsverbindung vom Einlass 102 zum Auslass 103 zustande kommt. Dabei sind die Endflächen 213, 214 des Düsenkörpers 21 in der Umgebung der Strömungskanalöffnungen die Dichtsitze und die Elastomere 23, 24 die Dichtkörper.
Danach wird der Führungszylinder 16 mit dem Düsenkörper 21 in eine entsprechende Ausnehmung (Bohrung) 104 im Ventilblock 10 eingeführt, so dass der ringförmige Flansch 181 der mit dem Führungszylinder 16 verschweißten Hülse 18 in eine hierfür am Ventilblock 10 vorgesehene ringförmige Vertiefung 105 gelangt. Nachfolgend wird der zunächst vorstehende Rand 106 der Vertiefung 105 in die in Fig. 1 dargestellte Form gekröpft, so dass das gesamte Ventil 11 unverrückbar fest mit dem Ventilblock verbunden ist. Schließlich wird der Bügel 17 mit der Spule 14 an den ringförmigen Flansch 181 gefügt und damit das Magnetventil 11 auf einfache Weise in einen gebrauchsfertigen Zustand versetzt.

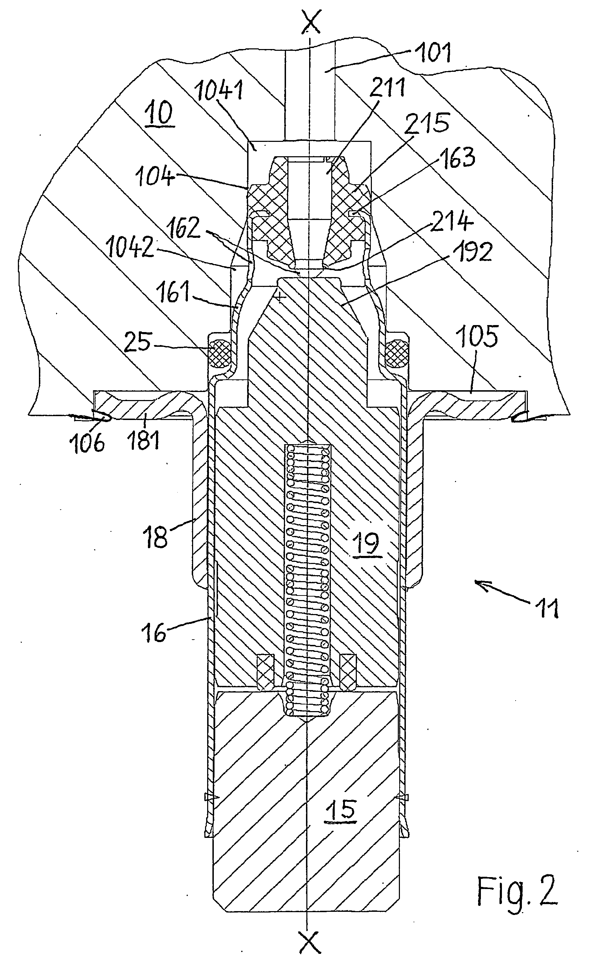

In Fig. 2 ist wieder ein Ventilblock 10 mit einer gestuften Eintauchbohrung 104 dargestellt, der einen Ausströmkanal 101 und einen verdeckt gezeichneten Einströmkanal aufweist. Vom Magnetventil 11 sind nur die für die nachfolgende Erläuterung wichtigen Teile dargestellt. Der ringförmige Flansch 181 einer Flussleithülse 18 wird durch einen gekröpften Rand 106 des Ventilblocks 10 fest in einer ringförmigen Vertiefung 105 gehalten. Die Hülse 18 ist mit einem Führungsrohr 16 verschweißt bzw. anderweitig gefügt, das mit einem abgesetzten Stück 161 geringerem Durchmessers bzw. Querschnitts in die Bohrung 104 hineinragt, am Ende des Stücks mit einem Flansch 163 und an seinem Umfang mit Strömungslöchern 162 versehen ist. Der Flansch 163 ist mit einem aus einem Elastomer bestehenden Dichtsitz (Düsenkörper) 21 umspritzt, in dem an der Stelle 215 O-Ring integriert ist und der die Bohrung 104 in zwei Räume 1041 und 1042 trennt, die über einen Strömungskanal 211 miteinander verbunden sind. Ein weiterer O-Ring 25 dichtet den Raum 1042 nach außen ab. Im Führungsrohr 16 sind ein Kern 15, der mit dem Rohr 16 fest verbunden ist, und ein Eisenanker 19 vorgesehen, der dem Düsenkörper 21 benachbart in einem Dichtkörper 192 endet. Im dargestellten bestromten Zustand des Elektromagneten 11 ist der Anker 19 entgegen der Wirkung einer Feder 20, die sich gegen Anker 19 und Kern 15 abstützt, vom Dichtsitz 21 abgehoben. Im unbestromten Zustand ist der Dichtkörper 192 gegen den Dichtsitz 214 gepresst; damit sind die Räume 1041 und 1042 lecklos voneinander getrennt, es fließt kein Medienstrom. Im Übrigen gilt bei dieser hinsichtlich der Fertigung und Montage günstigen Ventilvariante das zu Fig. 1 Gesagte sinngemäß. Auch die Anordnung der Fig. 2 ist hinsichtlich der Achse X-X im Wesentlichen rotationssymmetrisch getroffen.

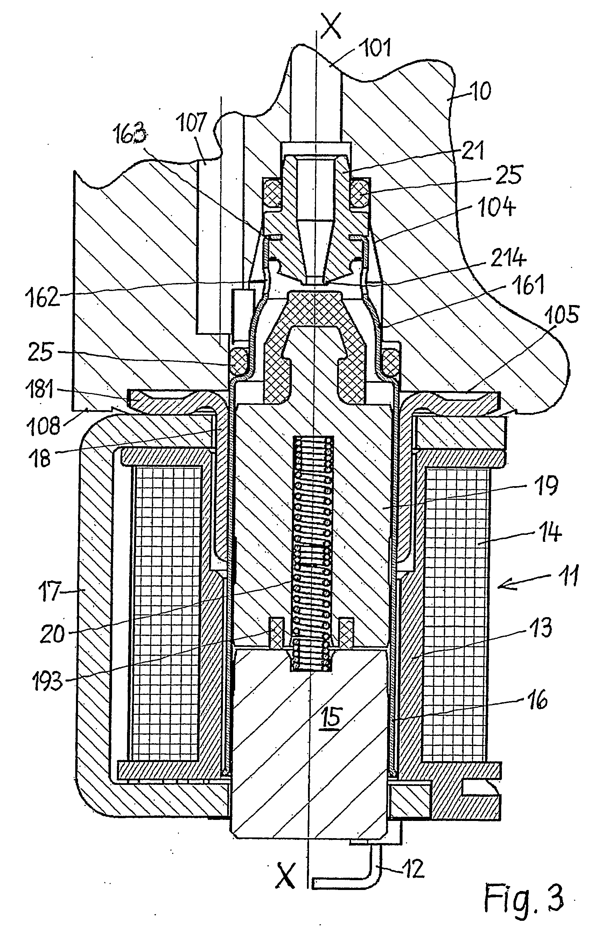

In Fig. 3 befindet sich in einem teilweise dargestellten Ventilblock 10 eine gestufte Eintauchbohrung 104, zu der Ein- und Ausströmkanäle 107 und 101 führen. In einer Außenfläche 108 des Ventilblocks 10 ist eine ringförmige Vertiefung 105 vorgesehen, die ebenso wie die Eintauchbohrung 104 koaxial zur Achse X-X eines in die Eintauchbohrung 104 eingeführten 2/2 Magnetventils 11 angeordnet ist. Dieses Magnetventil 11 weist wieder ein Führungsrohr 16 mit einem abgesetzten Stück 161 und Strömungsöffnungen 162 auf und ragt mit dem abgesetzten Stück in die Bohrung 104 hinein. Das Führungsrohr 16 ist von einem Spulenträger 13, einer Spule 14 und einem Bügel 17 teilweise umgeben und mit einer Hülse 18 fest verschweißt, die einen ringförmigen Flansch 181 zur Befestigung des Magnetventils 11 am Ventilblock 10 hat. Im Führungsrohr 16 ist einerseits ein Kern 15 befestigt, gegen den sich im bestromten Zustand des Magnetventils 11 ein mit einem Pufferring 193 versehener, axial beweglicher Anker 19 abstützt. Andererseits ist am Führungsrohr 16 ein Düsenkörper 21 mit einem Dichtsitz 214 befestigt, wobei das Führungsrohr 16 mit einem zur Achse X-X quergerichteten Flansch 163 in den Düsenkörper 21 hineinragt, bzw. der Düsenkörper 21 den Flansch 163 vollständig und formschlüssig umschließt.
Bei der Herstellung kann das Führungsrohr 16 durch Tiefziehen entstehen, in das an der tiefsten Stelle eine Öffnung eingestanzt wird, so dass der Flansch 163 stehen bleibt der danach mit einem Kunststoff als Düsenkörper 21 umspritzt wird. Dem Dichtsitz 214 zugewandt weist der Anker 19 einen Dichtkörper 23 auf, der im unbestromten Zustand des Magnetventils 11 den Dichtsitz 214 kontaktiert und die Düse 21 fest verschließt. Kern 15 und Dichtsitz 214 legen die Endlagen der Ankerbewegung fest. Der Abdichtung dienen O-Ringe 25. Im Übrigen gilt das zu den Figuren 1 und 2 Gesagte zumindest sinngemäß. Dabei versteht es sich von selbst, dass im Ventilblock 10 sich auch mehrere Magnetventile 11 befinden können.

Hinsichtlich der Fertigung, Formgebung und Fügung der einzelnen Bauelemente ist die Erfindung vielfältig variierbar. Das betrifft auch das gewählte kinematische Prinzip für die Ankerbewegung. So kann das Ventil durch eine geeignete Gestaltung auch im stromlosen Zustand offen und im bestromten Zustand geschlossen sein. Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 10: Ventilblock
- 11: Magnetventil
- 12: Anschlüsse
- 13: Träger
- 14: Spule
- 15: (Metall-)Kem
- 16: Führungszylinder, Führungsrohr
- 17: Bügel
- 18: Hülse
- 19: Anker
- 20: (Schrauben-)Feder
- 21: Düsenkörper
- 22: Stab
- 23, 24: Elastomerüberzug, Dichtkörper
- 25,215: O-Ringe
- 101, 102: Strömungskanäle, Auslässe
- 103: Strömungskanal, Einlass
- 104: Bohrung
- 105: ringförmige Vertiefung
- 106: gekröpfter Rand
- 107: Einströmkanäle
- 108: Außenfläche
- 151, 191: Bohrungen, Öffnungen
- 161: abgesetztes Stück
- 162: Strömungsöffnungen
- 163: Flansch
- 181: Ringförmiger Flansch
- 192: Vorsprung, Dichtkörper
- 193: Pufferring
- 211,212: Strömungskanäle
- 213,214: Endflächen, Dichtsitze
- 221: Teller
- 1041, 1042: Räume
- X-X: Achse

## Patentansprüche

1. Magnetventil (11) mit einem Führungsrohr (16) und mit einem an einem Anker (19) befestigten Dichtkörper (23) und einem Dichtsitz (214), die in dem Führungsrohr (16) relativ zueinander bewegbar sind und sich elastisch kontaktieren, **dadurch gekennzeichnet, dass** das Führungsrohr (16) an seinem dichtsitzseitigen Ende einen zur Ventilachse X-X quer gerichteten Flansch (163) aufweist, der vollständig von einem Düsenkörper (21) umpresst oder umspritzt ist.

2. Magnetventil gemäß Anspruch 1, **dadurch gekennzeichnet, dass** dem Dichtkörper (23) mindestens ein weiterer Dichtkörper (24) und dem Dichtsitz (214) mindestens ein weiterer Dichtsitz (213) zugeordnet ist, wobei sich der weitere Dichtkörper (24) und der weitere Dichtsitz (213) kontaktieren, wenn sich der erstgenannte Dichtkörper (23) nicht auf dem erstgenannten Dichtsitz (214) befindet.

3. Magnetventil gemäß mindestens einem der vorstehenden Ansprüche, **dadurch gekennzeichnet, dass** der Dichtsitz (214; 213) aus Kunststoff besteht.

4. Magnetventil gemäß mindestens einem der vorstehenden Ansprüche, **dadurch gekennzeichnet, dass** der Dichtsitz (214; 213) und/oder der Dichtkörper (23; 24) aus Elastomer bestehen.

5. Magnetventil gemäß Anspruch 3, **dadurch gekennzeichnet, dass** der Düsenkörper (21) aus einem Elastomer besteht und innerhalb des Führungsrohrs (16) den einen Dichtsitz (214) und außerhalb des Führungsrohrs (16) einen integrierten O-Ring (215) aufweist.

## Claims

1. Solenoid valve (11) having a guiding tube (16) and a sealing body (23), fastened to an armature (19), and a sealing seat (214), which can be displaced relative to each other in the guiding tube (16) and elastically contact each other, wherein the end of the guiding tube (16) facing the sealing seat (214) is provided with a flange (163) that is at an angle to the valve axis X-X and completely pressure-enclosed or coated by a nozzle body (21).

2. Solenoid valve according to claim 1, wherein at least one further sealing body (24) is assigned to the sealing body (23) and at least one further sealing seat (213) is assigned to the sealing seat (214) with the further sealing body (24) and the further sealing seat (213) contacting each other if the first mentioned sealing body (23) is not positioned at the first mentioned sealing seat (214).

3. Solenoid valve according to one of the previous claims, wherein the sealing seat (214; 213) is made of a plastic material.

4. Solenoid valve according to one of the previous claims, wherein the sealing seat (214; 213) and/or the sealing body (23; 24) are/is made of an elastomer.

5. Solenoid valve according to claim 3, wherein the nozzle body (21) is made of an elastomer and provided with one sealing seat (214) within the guiding tube (16) and with an integrated O-ring (215) outside the guiding tube (16).

## Revendications

1. L'électrovanne (11) comprenant un tube de guidage (16) et un corps étanche (23) avec un siège étanche (214) fixés sur un noyau mobile et en mesure de se déplacer dans le tube de guidage l'un en direction de l'autre et d'entrer en contact l'un avec l'autre de manière élastique, est **caractérisée en ce que** le tube de guidage (16) est doté, sur son extrémité côté siège étanche, d'une bride (163) située transversal à l'axe X-X de l'électrovanne, et complètement encastrée ou surmoulée d'un corps de buse (21).

2. L'électrovanne selon la revendication 1 est **caractérisée en ce qu'**au corps étanche (23) sont attribués au moins un autre corps étanche (24) et au siège étanche (214) au moins un autre siège étanche (213), le corps étanche additionnel (24) et le siège étanche additionnel (213) entrant en contact dans le cas où le corps étanche (23) premier cité n'est pas logé sur le siège étanche (214) premier cité.

3. L'électrovanne selon au moins une des revendications précédentes, est **caractérisée en ce que** le siège étanche (214; 213) est en matière plastique.

4. L'électrovanne selon au moins une des revendications précédentes est **caractérisée en ce que** le siège étanche (214; 213) et/ou des corps étanches (23; 24) sont en élastomère.

5. L'électrovanne selon la revendication 3 est **caractérisée en ce que** le corps de buse (21) est en élastomère et présente à l'intérieur du tube de guidage (16) l'un de siéges étanches (214) et à l'extérieur du tube de guidage (16) un joint torique intégré (215).
